# EUROPEAN PATENT APPLICATION

(11) **EP 4 797 562 A1**
(43) Date of publication of application: **26.08.2026**
(21) Application number: 23956118.6
(22) Date of filing: 20.10.2023
(51) Int. Cl.: H04B 7/15

(54) **RELAY DEVICE, BASE STATION, AND WIRELESS COMMUNICATION METHOD**

(71) Applicant: NTT DOCOMO, INC., Tokyo 100-6150 (JP)
(72) Inventor: ONODA, Takanobu, Tokyo 100-6150 (JP); KURITA, Daisuke, Tokyo 100-6150 (JP); HARADA, Hiroki, Tokyo 100-6150 (JP)
(74) Representative: Hoffmann Eitle
(86) International application number: PCT/JP2023/038007
(87) International publication number: WO 2025/083871

(57) **Abstract**

This relay device comprises: a communication unit that reflects, at a specific reflection angle, a signal incident at a specific incident angle; and a control unit that acquires information indicating the specific reflection angle and controls the communication unit on the basis of the information.

## Description

### Technical Field

The present disclosure relates to a relay apparatus, a base station, and a radio communication method.

### Background Art

The 3rd Generation Partnership Project (3GPP) has standardized a 5th generation mobile communication system (also referred to as 5G, New Radio (NR), or Next Generation (NG)), and is further standardizing a next generation system called Beyond 5G, 5G Evolution, or 6G.

In NR, in addition to a user terminal (may be referred to as user equipment (UE) or simply a terminal) and a radio base station (may be simply referred to as a base station), the introduction of a radio apparatus, such as a reconfigurable intelligent surface (RIS), is being considered to achieve a higher data rate and to extend a range of a coverage (for example, see Patent Literature (hereinafter, referred to as PTL) 1).

### Citation List

### Patent Literature

PTL 1
WO 2022/151016

### Summary of Invention

However, there is room for consideration regarding the control of an angle during a relay operation in a radio apparatus under consideration for introduction.

An aspect of the present disclosure is to provide a relay apparatus, a base station, and a radio communication method each capable of appropriately controlling an angle during a relay operation in a radio apparatus under consideration for introduction.

A relay apparatus according to an aspect of the present disclosure includes: a communication section that reflects, at a specific reflection angle, a signal incident at a specific incidence angle; and a control section that acquires information indicating the specific reflection angle and controls the communication section based on the information.

### Brief Description of Drawings

FIG. 1 is a diagram illustrating an example of a radio communication system according to an embodiment of the present disclosure;
FIG. 2A is a diagram illustrating an example of a distant user in a high frequency band;
FIG. 2B is a diagram illustrating an example of a non-line of sight user in a high frequency band;
FIG. 3A is a diagram illustrating an example of communication using a configuration of an NCR;
FIG. 3B is a diagram illustrating an example of communication using an RIS;
FIG. 4 is a diagram illustrating an example of a system architecture including the RIS;
FIG. 5 is a diagram illustrating an example of a near field (NF) and a far field (FF) of the RIS;
FIG. 6A is a diagram illustrating an example of DFT-based beamforming (BF);
FIG. 6B is a diagram illustrating an example of beamfocusing with an optimal phase;
FIG. 6C is a diagram illustrating an example of beamfocusing with a steering vector of a near field (NF);
FIG. 7 is a diagram illustrating an example of SSB forwarding with the RIS applied;
FIG. 8 is a diagram illustrating an example of use cases around a building;
FIG. 9 is a diagram illustrating an example of definition of an incidence angle and a reflection angle of the RIS;
FIG. 10 is a diagram illustrating examples of a correspondence relation between the incidence angle and the reflection angle in the RIS;
FIG. 11 is a block diagram illustrating an example of a configuration of a base station according to an embodiment of the present disclosure;
FIG. 12 is a block diagram illustrating an example of a configuration of a terminal according to the embodiment of the present disclosure;
FIG. 13 is a block diagram illustrating an example of a configuration of a radio apparatus according to the embodiment of the present disclosure;
FIG. 14 is a diagram illustrating an example of a hardware configuration of the base station, the terminal, and the radio apparatus according to the embodiment of the present disclosure; and
FIG. 15 is a diagram illustrating an exemplary configuration of a vehicle.

### Description of Embodiments

### (Embodiment)

Hereinafter, embodiments according to an aspect of the present disclosure will be described with reference to the accompanying drawings. Note that the embodiments described below are merely examples, and the embodiments to which the present disclosure is applied are not limited to the following embodiments.

Existing techniques are used as appropriate for operations of a radio communication system in an embodiment of the present disclosure. Note that the existing technology is, for example, existing LTE or existing NR, but is not limited to existing LTE or NR.

Terms used in existing LTE or NR, such as a synchronization signal (SS), a primary SS (PSS), a secondary SS (SSS), a physical broadcast channel (PBCH), a physical random access channel (PRACH), a physical downlink control channel (PDCCH), a physical downlink shared channel (PDSCH), a physical uplink control channel (PUCCH), and a physical uplink shared channel (PUSCH), are used in an embodiment of the present disclosure described below. This is for the sake of convenience in description, and the same signals, functions, and the like may be called by other names. In addition, the above terms in NR correspond to NR-SS, NR-PSS, NR-SSS, NR-PBCH, NR-PRACH, and the like. Note that, even though the signal used in NR, it is not necessarily explicitly referred to as "NR-".

Further, in an embodiment of the present disclosure, the duplex method may be a time division duplex (TDD) method, a frequency division duplex (FDD) method, or another method (for example, a flexible duplex method).

Furthermore, in an embodiment of the present disclosure, the term "configured" with respect to a radio parameter or the like may refer to a predetermined value being preconfigured, or it may refer to a radio parameter indicated from a base station or a terminal being configured.

### <Radio Communication System>

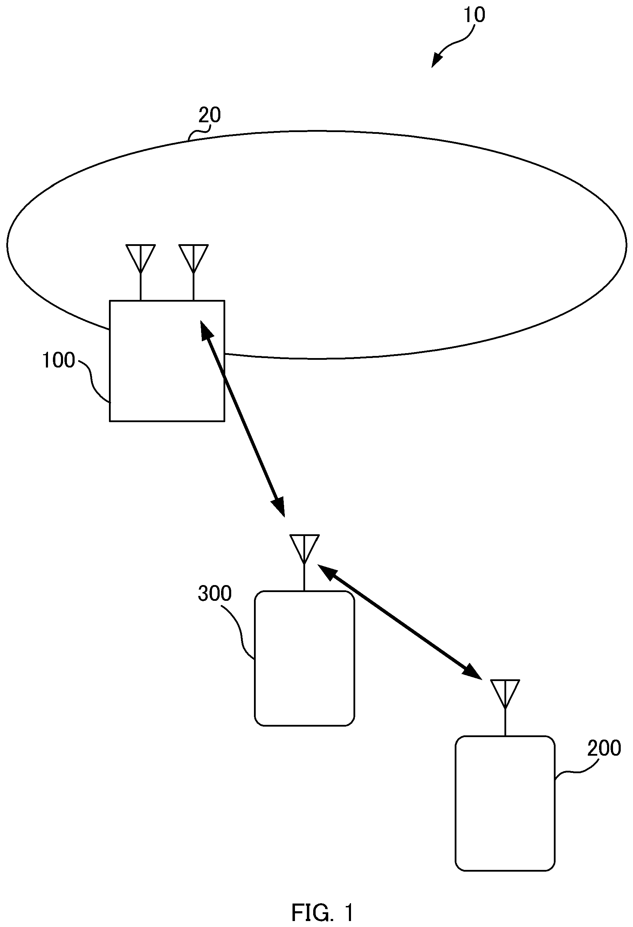

FIG. 1 is a diagram illustrating an example of radio communication system 10 according to an embodiment of the present disclosure. Radio communication system 10 is a radio communication system conforming to 5G NR or 6G NR, and includes next generation-radio access network 20 (hereinafter, referred to as NG-RAN 20) and terminal 200 (hereinafter, also referred to as user equipment (UE) 200).

Note that radio communication system 10 may be a radio communication system conforming to a system called Beyond 5G, 5G Evolution, or 6G.

NG-RAN 20 includes base station 100 (hereinafter also referred to as gNB 100). Note that the numbers of gNBs and UEs are not limited to the example illustrated in FIG. 1.

NG-RAN 20 actually includes a plurality of NG-RAN nodes, specifically gNBs (or ng-eNBs), and is connected to a core network conforming to 5G or 6G. Note that NG-RAN 20 and the core network may be simply referred to as a "network." Further, in the following, the gNB may be read as a network (NW).

gNB 100 is, for example, a base station conforming to 5G or 6G, and performs radio communication conforming to 5G or 6G with UE 200.

In addition, in the example illustrated in FIG. 1, radio apparatus 300 that forwards signals is illustrated between gNB 100 and UE 200. In the following, radio apparatus 300 may be referred to as a reconfigurable intelligent surface (RIS).

Radio apparatus 300 performs a forwarding operation of forwarding a signal transmitted from gNB 100 toward UE 200, for example. Radio apparatus 300 may also perform a forwarding operation of forwarding a signal transmitted from UE 200 toward gNB 100. The "forwarding (forward)" may be replaced with "relaying". Further, the "operation" may be replaced with "processing," "control," or the like. In addition, the RIS, which is an example of radio apparatus 300 being considered in NR, will be described later.

gNB 100 and UE 200 may controls radio signals transmitted from a plurality of antenna elements to handle Massive Multi Input Multi Output (MIMO) for generating a beam having a higher directivity, carrier aggregation (CA) using a plurality of component carriers (CCs) bundled together, dual connectivity (DC) for performing communication between UE and each of two NG-RAN nodes simultaneously, and the like.

Further, radio communication system 10 may support a plurality of frequency ranges (FRs). Radio communication system 10 may support FR1 and FR2. The frequency bands of respective FRs are as follows, for example.
- FR1: 410 MHz to 7.125 GHz
- FR2: 24.25 GHz to 52.6 GHz

In FR1, a sub-carrier spacing (SCS) of 15 kHz, 30 kHz, or 60 kHz may be used, and a bandwidth (BW) of 5 to 100 MHz may be used. FR2 is a higher frequency than FR1, and SCS of 60 kHz or 120 kHz (240 kHz may be included) may be used, and a bandwidth (BW) of 50 to 400 MHz may be used.

Note that, the SCS may be interpreted as numerology. The numerology is defined in 3GPP TS 38.300 and corresponds to one subcarrier spacing in a frequency domain.

Further, radio communication system 10 may support a frequency band higher than the frequency band of the FR2. Specifically, radio communication system 10 may support a frequency band of above 52.6 GHz to 114.25 GHz. Such a high frequency band may be referred to as "FR2x" for convenience. In a case where a band above 52.6 GHz is used, Cyclic Prefix-Orthogonal Frequency Division Multiplexing (CP-OFDM)/Discrete Fourier Transform-Spread-Orthogonal Frequency Division Multiplexing (DFT-S-OFDM) having a larger SCS may be applied.

The time direction (t) may be referred to as a time domain, a symbol period, a symbol time, or the like. Further, the frequency direction may be referred to as a frequency domain, a resource block, a subcarrier, a bandwidth part (BWP), or the like.

gNB 100 transmits control information, configuration information, and the like of gNB 100 to UE 200 as a downlink (DL) signal.

Further, for example, gNB 100 receives, as an uplink (UL) signal, control information, a data signal, information on the processing capability of UE 200 (terminal capability (information); for example, UE capability), and the like from UE 200.

Radio apparatus 300 performs a forwarding operation of forwarding a DL signal to UE 200. Radio apparatus 300 performs a forwarding operation of forwarding a UL signal to gNB 100. Note that, in the following, the UL signal received by gNB 100 from UE 200 and/or the DL signal received by UE 200 from gNB 100 may be a signal forwarded by radio apparatus 300.

UE 200 is a communication apparatus with a radio communication function, such as a smartphone, a mobile phone, a tablet, a wearable terminal, and a communication module for Machine-to-Machine (M2M).

UE 200 receives a control signal or a data signal from gNB 100 in DL and transmits a control signal or a data signal to gNB 100 in UL, thereby utilizing various communication services provided by radio communication system 10. Further, UE 200 receives various reference signals transmitted from gNB 100 and performs measurement of the propagation path quality based on a reception result of the reference signals.

The channel used for DL signal transmission includes, for example, a data channel and a control channel. For example, the data channel may include a Physical Downlink Shared Channel (PDSCH), and the control channel may include a Physical Downlink Control Channel (PDCCH). For example, gNB 100 transmits control information to UE 200 using PDCCH and transmits a DL data signal using PDSCH. Note that the PDSCH is an example of a downlink shared channel, and the PDCCH is an example of a downlink control channel. Note that the PDCCH may be read as downlink control information (DCI), control information, or the like transmitted in the PDCCH.

The reference signal included in a DL signal may include, for example, at least one of a Demodulation Reference Signal (DMRS), a Phase Tracking Reference Signal (PTRS), a Channel State Information-Reference Signal (CSI-RS), a Sounding Reference Signal (SRS), and a Positioning Reference Signal (PRS) for position information. For example, the reference signal such as the DMRS and the PTRS is used for demodulation of a DL data signal and is transmitted using the PDSCH.

The channel used for UL signal transmission includes, for example, a data channel and a control channel. For example, the data channel may include a Physical Uplink Shared Channel (PUSCH), and the control channel may include a Physical Uplink Control Channel (PUCCH). For example, UE 200 transmits control information using PUCCH and transmits a UL data signal using PUSCH. Note that the PUSCH is an example of an uplink shared channel, and the PUCCH is an example of an uplink control channel. The shared channel may also be referred to as a data channel. Note that the PUSCH or the PUCCH may be read as uplink control information (UCI), control information, or the like transmitted in the PUSCH or the PUCCH.

The reference signal included in a UL signal may include, for example, at least one of the DMRS, the PTRS, the CSI-RS, the SRS, the RS, and the PRS for positional information. For example, the reference signal such as the DMRS and the PTRS is used for demodulating a UL data signal and is transmitted using the PUSCH.

### <Use of Sub-Terahertz Waves>

In a future radio communication system (for example, 6G and thereafter), strict requirements are introduced with respect to capacity, coverage, power consumption, and other aspects. Studies have been conducted for realizing a data rate of 100 Gbps while maintaining sufficient coverage by using a band (spectrum) of sub-terahertz (for example, 100 GHz to 300 GHz) that is a higher frequency band than the existing systems (for example, NR Rel. 15/16/17).

In the studies, a transmission method of line of sight (LOS)-MIMO suitable for an access link is considered to be designed with 100 GHz, 100 Gbps, and (coverage of) 100 m as a target.

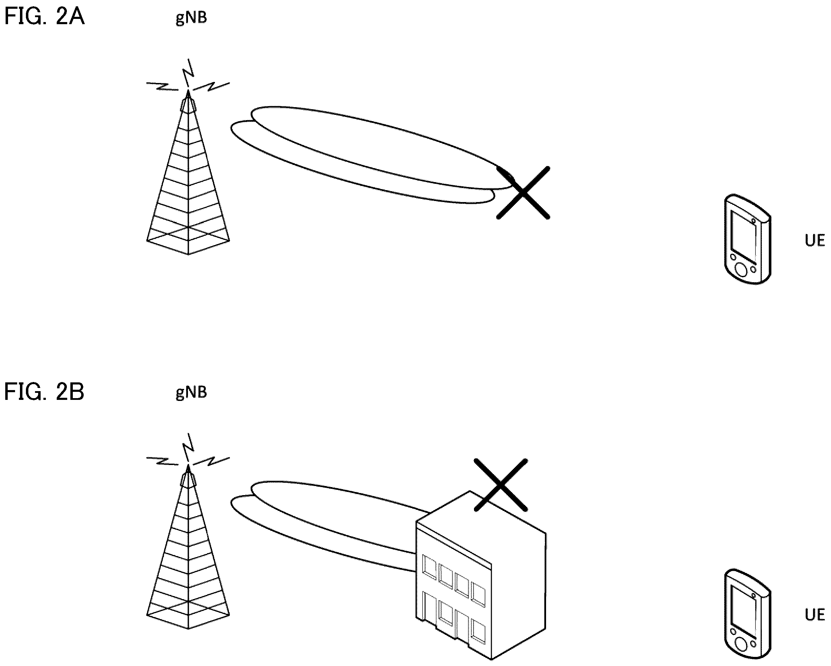

FIG. 2A is a diagram illustrating an example of a distant user in a high frequency band. In the example illustrated in FIG. 2A, orthonormal transmission cannot be performed because of a restriction on the size of a base station (BS) for mega MIMO for distant users.

FIG. 2B is a diagram illustrating an example of a non-line of sight (NLOS) user in a high frequency band. For NLOS users, efficient LOS-MIMO transmission cannot be performed due to blocking (for example, a building).

The LOS-MIMO is not supported in MIMO of the existing NR (NR MIMO). In the existing NR, a very large bandwidth is needed to achieve the data rate of 100 Gbps, and it is difficult to secure such a very large bandwidth.

The NR MIMO is designed for an antenna far-field that only supports transmission of rank 1 in each polarization direction in an LOS channel. Multiplexing of rank 2 is possible by using double polarization, but a rank higher than rank 2 cannot be used. In order to achieve 100 Gbps, a bandwidth of several tens of GHz is required, but this is difficult to achieve in a practical system and places a high requirement on an RF component.

A LOS-MIMO scheme that has already been considered is not suitable for the access link because transmission and reception positions need to be fixed, or because a required array size is too large.

Therefore, studies have been conducted on introduction of a fixed large-interval antenna array, an orbital angular momentum (OAM)-MIMO, a mega MIMO utilizing a reconfigurable intelligent surface (RIS) (RIS-aided Mega MIMO), and the like.

The RIS has attracted attention as a new apparatus for network deployment by its flexible and cost-efficient approach, not limited to the example of the sub-terahertz waves described above. The RIS is being considered as a promising technology for achieving a very high data rate and a wide coverage extension in the topology of a 6G radio network. For example, in Release 19 (Rel. 19), discussion on the RIS is being advanced.

### <Reconfigurable Intelligent Surface (RIS)>

The RIS relays communication between BS and UE by controlling a reflection angle of at least one of the reflection from a backhaul link toward an access link and the reflection from the access link toward the backhaul link. The RIS is an example of a radio apparatus for performing network deployment in a flexible and cost-efficient approach as compared with a new type of network (NW) node, such as an integrated access and backhaul (IAB), an RF repeater, and a network-controlled repeater (NCR).

The RIS may be configured by a plurality of reconfigurable scattering components. In the following, the scattering component is sometimes referred to as an element or an antenna element.

The RIS may control the direction of a reflected signal, or may control the direction of a transmitted (refracted) signal.

Note that, in the present disclosure, reflection, transmission, and refraction may be replaced with each other. Further, in the present disclosure, reflection, transmission, and refraction of a signal in the RIS may be regarded as the RIS receiving the signal transmitted from a specific direction and transmitting the signal in the same direction as the specific direction, or in a direction different from the specific direction. In this case, the signal transmitted by the RIS may be the same signal as the signal received by the RIS, or may be a signal that has been received by the RIS and has undergone specific processing. In addition, the forwarding processing in the RIS in the present disclosure may be regarded as processing in which at least one of reflection, transmission, and refraction occurs in the RIS.

While the NCR amplifies a signal to be relayed, the RIS may not require an RF amplifier. This reduces the power consumption.

The RIS can obtain a beam gain by a narrow beam, but requires an increased number of RIS beams (beams reflected/refracted by the RIS).

The RIS may reflect/refract a signal other than a target frequency.

A material such as a liquid crystal, a metal, and a semiconductor may be used for the RIS. For example, the RIS using the liquid crystal is considered to be unsuitable for the current beam sweep operation due to the beam sweep speed slower than that of the RIS using the semiconductor.

The RIS may be installed on an object, such as a building, considering its thin and flexible shape.

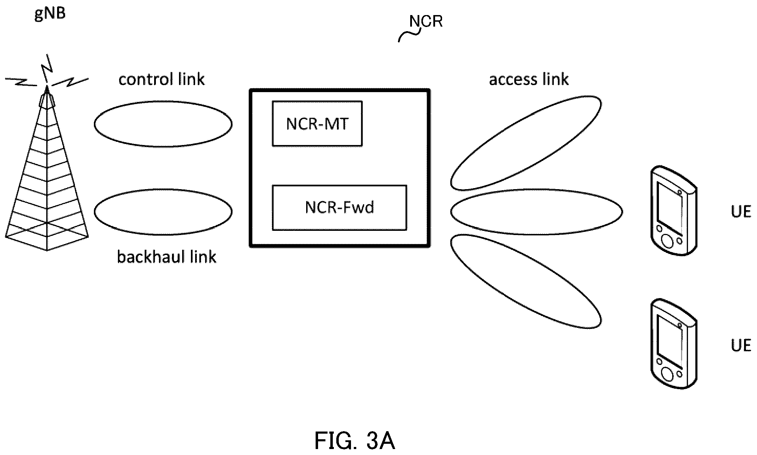

FIG. 3A is a diagram illustrating an example of communication using a configuration of an NCR. The NCR may include an NCR-mobile termination (MT) and an NCR-forwarding (Fwd). The NCR-MT communicates with a BS (gNB) via a control link.

The communication between the NCR-MT and the BS may include at least one of receiving configuration/instruction/control information from the BS and transmitting a request/report/response to the BS. The NCR-Fwd relays communication between the BS and UE by relaying/amplifying a signal from a backhaul link to an access link and relaying/amplifying a signal from the access link to the backhaul link.

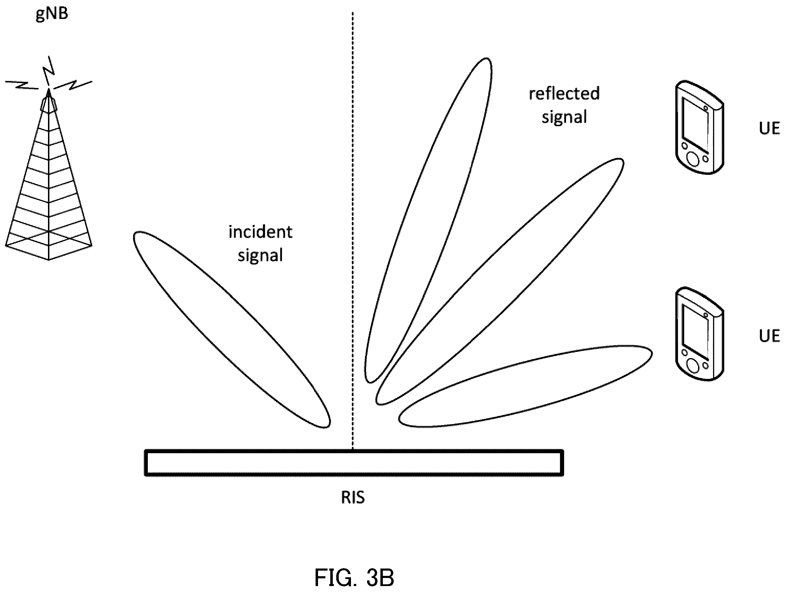

FIG. 3B is a diagram illustrating an example of communication using the RIS. The RIS relays communication between the BS and the UE by controlling a reflection angle of at least one of the reflection from a backhaul link toward an access link and the reflection from the access link toward the backhaul link.

### <System Architecture Including RIS>

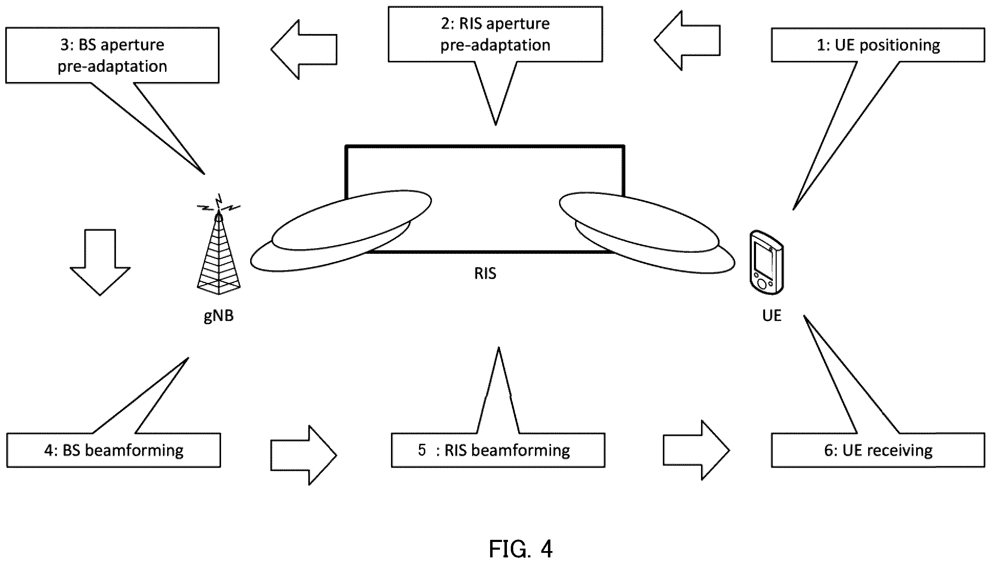

FIG. 4 is a diagram illustrating an example of a system architecture including the RIS. Hereinafter, the system architecture including the RIS will be described with reference to FIG. 4, but this is merely an example.

The system architecture including the RIS may include a plurality of (for example, two) design phases.

For example, the system architecture including the RIS may include an aperture pre-adaptation phase.

In the aperture pre-adaptation phase, positioning of UE may be performed first. In the positioning of the UE, the UE may report information on the position/attitude of the UE to a network (NW). In addition, in the positioning of the UE, the NW (base station) may estimate the information on the position/attitude of the UE based on a signal (for example, a UL RS) transmitted from the UE.

Note that the positioning of the UE in the aperture pre-adaptation phase may be omitted.

Next, in the aperture pre-adaptation phase, aperture (for example, an antenna element) pre-adaptation of the RIS may be performed.

In the present disclosure, the aperture adaptation may mean deciding/determining/selecting an antenna element/array to be used.

Next, in the aperture pre-adaptation phase, aperture (for example, an antenna element) pre-adaptation of the BS may be performed.

Further, the system architecture including the RIS may include a beamforming phase.

The beamforming phase may follow the aperture pre-adaptation phase, for example.

In the beamforming phase, beamforming in the BS may be performed first.

Next, in the beamforming phase, beamforming in the RIS may be performed.

Then, in the beamforming phase, the UE may perform receiving. The UE may use a MIMO receiver based on CSI reception (CSIR).

Note that the receiving by the UE in the beamforming phase may be omitted.

### <Beamforming Methods for Far Field and Near Field>

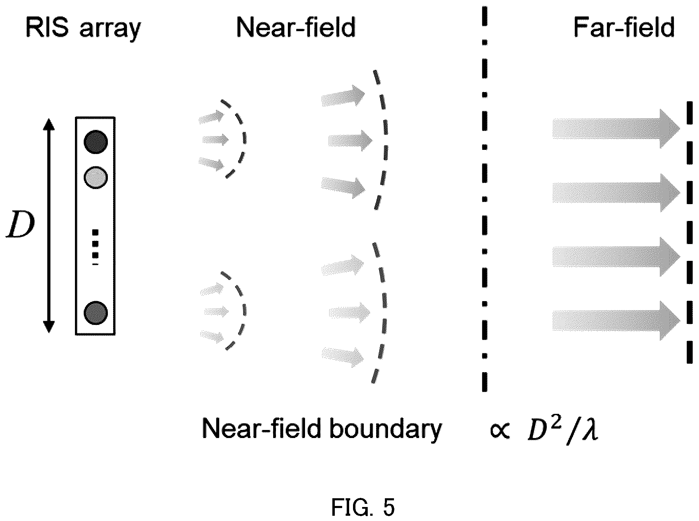

FIG. 5 is a diagram illustrating an example of a near field (NF) and a far field (FF) of the RIS. FIG. 5 illustrates an RIS array, a state of wave propagation in the near field of the RIS array, and a state of wave propagation in the far field of the RIS array. Note that the RIS array may be regarded as an example of a surface that transmits a signal or radiates a wave in the RIS. In addition, the near field may be replaced with a short distance. Further, the far field may be replaced with a long distance.

A large aperture of the RIS indicates a specific characteristic of expanding a range of the near field. For example, as illustrated in FIG. 5, the boundary of the near field (for example, the boundary between the near field and the far field) is proportional to the square of D that indicates the size related to the aperture of the RIS, and thus the large aperture of the RIS expands the range of the near field. In addition, the boundary of the near field is inversely proportional to the wavelength λ, and thus the shorter the wavelength, that is, the higher the frequency, the larger the range of the near field. In the region of the near field, the phase delay for various elements of the RIS can be distinguished. As a result, the assumption of a plane wavefront is not useful, and it is necessary to consider a spherical wavefront. As illustrated in FIG. 5, in the region of the far field, a wavefront of a wave radiated from each element of the RIS is assumed to be a plane, but in the region of the near field, a wavefront of a wave generated from each element is a sphere.

A plurality of methods is being considered as a beamforming method for the existing far-field (FF) and near-field (NF).

For example, the beamforming methods may include a DFT-based beamforming (BF), a beamfocusing with an optimum phase, and a beamfocusing with a steering vector of a near field (NF).

The DFT-based BF may be mainly used for transmitting a signal to a distant terminal. The DFT-based BF may use a precoder (matrix) based on an angle-dependent linear phase.

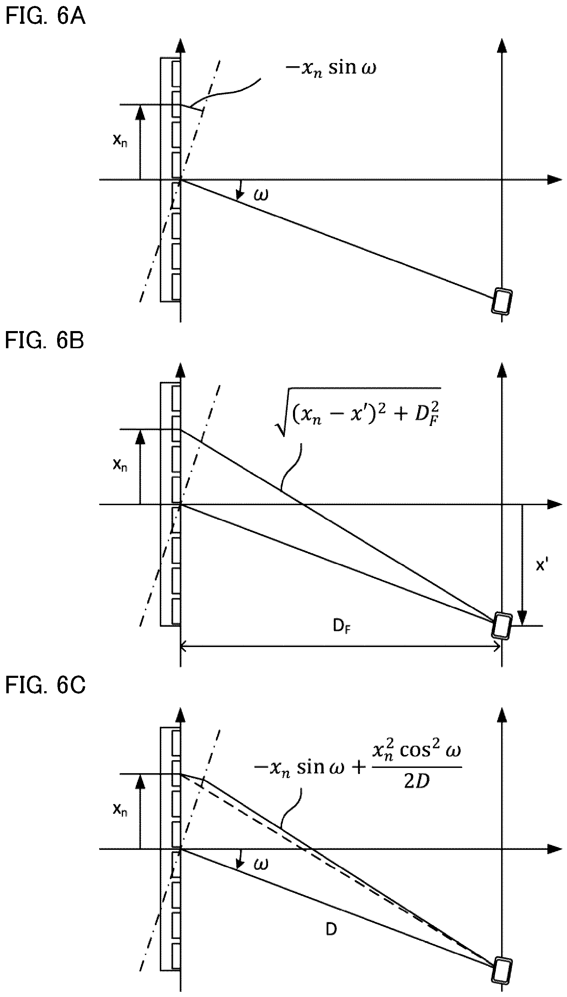

FIG. 6A is a diagram illustrating an example of the DFT-based beamforming (BF). Note that FIG. 6A illustrates an example of a uniform and linear array. In this example, xn is a distance from the array center to element n in the array and is an angle of a beam with respect to an axis perpendicular to the array.

The beamfocusing with the optimum phase may be mainly used for transmitting a signal to a close terminal. The beamfocusing with the optimum phase may use a precoder (matrix) based on a position (distance)-dependent non-linear phase.

FIG. 6B is a diagram illustrating an example of the beamfocusing with the optimum phase. Note that FIG. 6B illustrates an example of a uniform and linear array. In this example, DF is a focal distance, and x' is a distance from an axis perpendicular to the array to the focus.

The beamfocusing with the steering vector of the near field may be mainly used for transmitting a signal to a close terminal. The beamfocusing with the steering vector of the near field may use a precoder (matrix) based on an angle- & position (distance)-dependent quadratic phase.

FIG. 6C is a diagram illustrating an example of the beamfocusing with the steering vector of the near field (NF). Note that FIG. 6C illustrates an example of a uniform and linear array. In this example, D is a distance from the center of the array to the focus, and ω is an angle from an axis perpendicular to the array to a straight line connecting the center of the array and the focus.

A conventional codebook for beamforming in the far field, such as a DFT codebook, cannot be directly applied to the near field because the conventional codebook is not suited to a channel in the near field. If the DFT codebook is applied to the beamforming in the near field, that may cause a significant loss of the SNR. In contrast, focused beamforming such as a ring-type codebook (RTC), which is a form in the near field of a coherent beamformer, does not have a restriction such as not being applicable to the near field.

For example, the RIS is adopted for data channel forwarding, and the above-described RTC generates a UE-specific focused beam to enable high-speed transmission.

Meanwhile, it is considered to use the RIS for forwarding a control channel (for example, a synchronization signal block (SSB)).

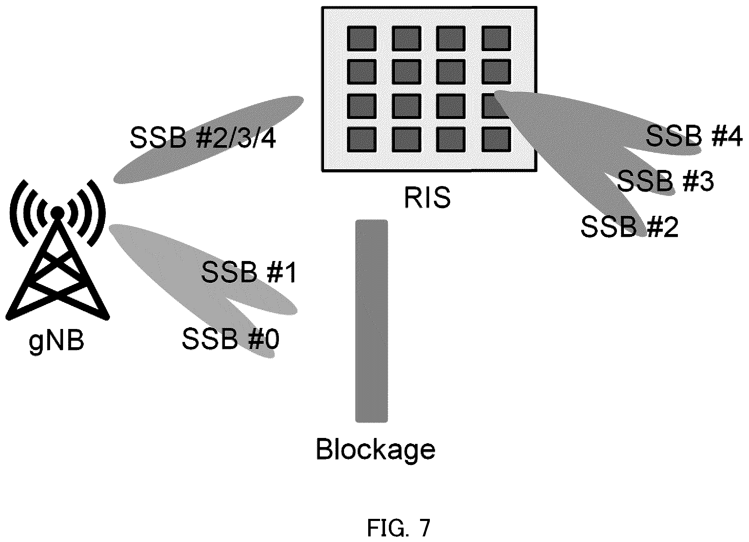

FIG. 7 is a diagram illustrating an example of SSB forwarding with the RIS applied. FIG. 7 illustrates the RIS forwarding the SSBs #2 to #4 among the SSBs #0 to #4 transmitted by the gNB.

In a case where the RIS forwards a control channel (for example, the SSB), it is considered to expand a beam for the forwarding.

### <Considerations in Present Embodiment>

In recent years, beyond 5G/6G has been studied in and outside of Japan. In 6G, higher required performance is assumed. In addition, in 6G, various use cases are assumed, such as:
- Ultra coverage extension and ultra long-distance communication;
- Ultra high capacity;
- Ultra reliable communication;
- Virtual cell (user centric no cell);
- Flexible NW; and
- Mesh NW/Side link.

In 6G, it is desirable to incorporate these use cases into the design.

For 6G, the use of a high frequency band and the extension of coverage are considered. As one of methods for realizing the use of the high frequency band and the extension of the coverage, a placement design using the network controlled repeater (NCR) and/or the reconfigurable intelligent surface (RIS) as described above is considered.

In the following, the NCR and/or the RIS may be referred to as an NCR/RIS. The NCR/RIS may be an NCR, may be an RIS, may be an RIS having a function of the NCR, or may be an NCR having a function of the RIS. In addition, the NCR/RIS may be UE having a function of the NCR and/or the RIS. Further, in a case where a plurality of NCR/RISs are present, the plurality of NCR/RISs may include a mixture of the NCR and the RIS.

In the following, the RIS with a configuration having the same function as the NCR-MT described above, for example, a function of performing at least one of receiving a configuration/indication/control information from a base station or transmitting a request/report/response to the base station, may be referred to as an RIS-MT. In addition, in the following, the RIS with a configuration having the same function as the NCR-Fwd described above, for example, a function of relaying/forwarding communication between a base station and UE by relaying/amplifying from a backhaul link to an access link and relaying/amplifying from the access link to the backhaul link, may be referred to as an RIS-Fwd. Note that, in the following description, the "RIS" may be replaced with the "RIS-MT" or the "RIS-Fwd".

As a method for extending the coverage, it is considered to cover a range that cannot be covered by the base station by appropriately positioning the RIS between the base station and the UE.

For the RIS, it is naturally desired to be provided in and around a building and/or a structure of skyscrapers (for example, street canyon), a factory, or the like, and to perform control of an operation for extending the coverage (for example, control of a reflection angle) according to the provided location. For example, in the RIS, control is performed from the viewpoint of which beam is directed in which direction from which location.

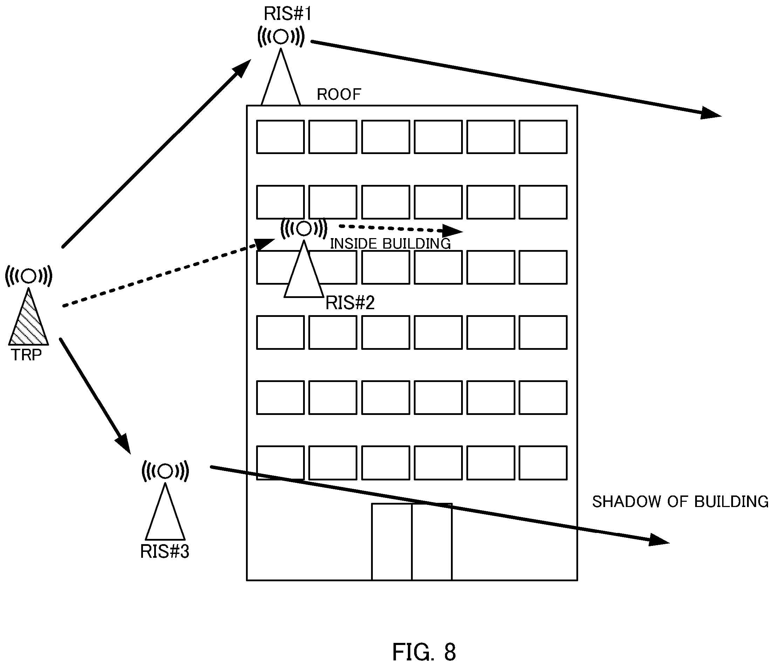

FIG. 8 is a diagram illustrating an example of use cases around a building. FIG. 8 illustrates RISs provided on a roof, inside, and outside of a building. In the example of FIG. 8, it is assumed that the RIS provided on the roof directs a beam to UE or the like present in a direction of looking down from the roof. In addition, it is assumed that the RIS provided inside the building directs a beam to UE present inside the building. Further, in the example of FIG. 8, it is assumed that the RIS provided outside the building directs a beam to UE at a location that is not visible from the TRP (for example, a location in the shadow of the building).

As illustrated in FIG. 8, in the RIS, control is performed of which beam is directed in which direction from which location. However, there is no specification for controlling an incidence angle of a radio wave incident on the RIS when a radio wave (for example, a signal) is radiated to the RIS and a reflection angle of the radio wave when the incident radio wave is reflected by the RIS, and there is room for consideration.

For example, when the radio wave is radiated to the RIS, it is difficult to confirm the incidence angle of the radio wave on the RIS from both the NW side (for example, the base station) and the RIS. When the incidence angle is difficult to confirm, the reflection angle with respect to the incidence angle cannot be appropriately controlled, and thus it is difficult to extend the coverage by reflecting the radio wave in a desired direction.

In addition, it is difficult to grasp the angle at which the RIS reflects a radio wave incident on the RIS at a certain incidence angle, that is, a correspondence between the incidence angle and the reflection angle. In a case where the correspondence between the incidence angle and the reflection angle is difficult to grasp, the reflection angle cannot be appropriately controlled with respect to the incidence angle, and thus it is difficult to extend the coverage by reflecting the radio wave in a desired direction. For example, in a case where the correspondence between the incidence angle and the reflection angle cannot be grasped although the NW (for example, the base station) can grasp the incidence angle of the radio wave on the RIS, it is unclear at which reflection angle the RIS can reflect the radio wave with respect to the incidence angle, and thus it is not possible to perform control of reflecting the radio wave in a desired direction.

In addition, a method of dynamically controlling the RIS by the NW side (for example, the base station) has not been sufficiently studied. For example, the control of the RIS is control of reflecting a radio wave incident on the RIS in a direction having a specific reflection angle. For example, in a case where the RIS cannot be dynamically controlled, it is not possible to request the RIS to reflect the radio wave in two or more different directions. For example, in a case where two or more UEs are present in different directions, it is difficult to perform control of reflecting the radio wave toward a specific one UE (for example, UE#1) at a certain time and reflecting the radio wave toward a UE other than UE#1 at another time. Therefore, the reflection angle cannot be appropriately controlled with respect to the incidence angle, and it is difficult to extend the coverage by reflecting the radio wave in a desired direction.

Thus, in the present embodiment, a method of appropriately controlling the RIS (for example, controlling the incidence angle and the reflection angle) in the placement design of the RIS will be described.

### <Proposal 1>

In Proposal 1, derivation of the incidence angle on the RIS and indication of information related to the correspondence between the incidence angle and the reflection angle will be described.

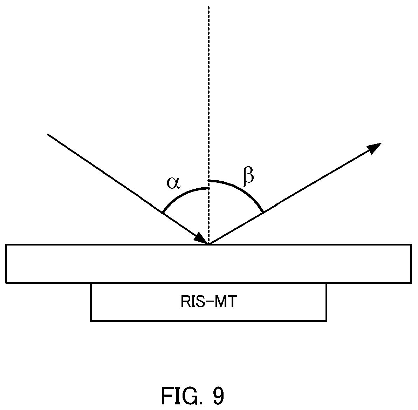

FIG. 9 is a diagram illustrating an example of definition of the incidence angle and the reflection angle on the RIS. FIG. 9 illustrates incidence angle α of a radio wave incident on the RIS and reflection angle β of the radio wave reflected by the RIS. In the example of FIG. 9, the radio wave incident at incidence angle α may correspond to a signal of the backhaul link. In addition, in the example of FIG. 9, the radio wave reflected at reflection angle β may correspond to a signal of the access link.

For example, the RIS performs control of reflecting the radio wave incident at specific incidence angle α at specific reflection angle β.

A method of deriving the incidence angle is not particularly limited, but for example, any of the following options 1 to 4 may be used.

### <Option 1 of Proposal 1>

In Option 1 of Proposal 1, the base station derives the incidence angle. For example, the base station derives the incidence angle based on a positional relationship between an antenna of the base station and the RIS.

For example, the positional relationship between the antenna of the base station and the RIS is obtained from information on a three-dimensional position of the antenna of the base station and information on a three-dimensional position of the RIS. Then, the base station may derive the incidence angle from a geometric positional relationship between the antenna of the base station and the RIS in a three-dimensional space based on the information on the three-dimensional position of the antenna of the base station and the information on the three-dimensional position of the RIS. For example, a straight line connecting a representative point of the antenna (for example, a center of the antenna) of the base station and a representative point of the reflective surface (for example, a center of the reflective surface) of the RIS in the three-dimensional space may be defined, and an angle formed by the defined straight line and a perpendicular line extending perpendicularly from the representative point of the reflective surface of the RIS may be the incidence angle.

Note that the information on the three-dimensional position of the antenna of the base station includes at least one of position information of the base station in a two-dimensional plane (for example, latitude and longitude), an altitude of the antenna of the base station, a tilt angle of the antenna of the base station, and a rotation angle.

Note also that the information on the three-dimensional position of the RIS includes at least one of position information of the RIS in a two-dimensional plane (for example, latitude and longitude of the position of the RIS), an altitude of the RIS, and an angle of the RIS (orientation of the RIS).

Here, the base station may hold the information on the three-dimensional position of the antenna of the base station. Meanwhile, the base station may acquire the information on the three-dimensional position of the RIS from the RIS, may acquire the information from an external device other than the RIS, or may hold the information in advance.

In Option 1 of Proposal 1, in a case where the reflection angle is unknown, the base station transmits the incidence angle derived by the base station to the RIS (for example, the RIS-MT). Then, the RIS derives information on the possible reflection angle with respect to the incidence angle acquired from the base station based on the characteristics of the RIS (for example, the capability of the RIS). The RIS may record the information on the possible reflection angle with respect to the incidence angle (for example, a set of the incidence angle and the possible reflection angle) and may indicate the recorded information to the base station. The information to be indicated to the base station may be, for example, information in which a set of the incidence angle and the possible reflection angle is recorded in a table format.

### <Variation of Option 1 of Proposal 1>

Option 1 of Proposal 1 is for an example in which a radio wave radiated from the base station and incident on the RIS is reflected by the RIS, but the present disclosure is not limited to this example. For example, Option 1 of Proposal 1 may be used in an example in which a radio wave radiated from a radio communication apparatus (for example, the UE) other than the base station and incident on the RIS is reflected by the RIS. In this case, the radio wave radiated from the UE and incident on the RIS at incidence angle α may correspond to a signal of the access link. In addition, the radio wave reflected at reflection angle β may correspond to a signal of the backhaul link.

In this case, the UE may derive the incidence angle based on a positional relationship between an antenna of the UE and the RIS. In addition, for example, in this case, a positional relationship between the antenna of the UE and the RIS is exemplarily obtained from information on a three-dimensional position of the antenna of the UE and information on a three-dimensional position of the RIS. Then, the UE may derive the incidence angle from a geometric positional relationship between the antenna of the UE and the RIS in a three-dimensional space based on the information on the three-dimensional position of the antenna of the UE and the information on the three-dimensional position of the RIS. For example, a straight line connecting a representative point of the antenna (for example, a center of the antenna) of the UE and a representative point of the reflective surface (for example, a center of the reflective surface) of the RIS in the three-dimensional space may be defined, and an angle formed by the defined straight line and a perpendicular line extending perpendicularly from the representative point of the reflective surface of the RIS may be the incidence angle.

Note that the information on the three-dimensional position of the antenna of the UE includes at least one of position information of the UE in a two-dimensional plane (for example, latitude and longitude), an altitude of the antenna of the UE, a tilt angle of the antenna of the UE, and a rotation angle. Note that the position of the antenna of the UE may be simply replaced with the position of the UE. For example, the altitude of the antenna of the UE may be simply the altitude of the UE.

### <Option 2 of Proposal 1>

In Option 2 of Proposal 1, the RIS (for example, the RIS-MT) derives the incidence angle. For example, as in Option 1 of Proposal 1, the RIS derives the incidence angle based on a positional relationship between the antenna of the base station and the RIS (for example, the reflective surface of the RIS).

For example, the positional relationship between the antenna of the base station and the RIS is obtained from information on a three-dimensional position of the antenna of the base station and information on a three-dimensional position of the RIS. Note that the derivation of the incidence angle based on the information on the three-dimensional position of the antenna of the base station and the information on the three-dimensional position of the RIS may be the same as in Option 1 of Proposal 1.

Note that the information on the three-dimensional position of the antenna of the base station includes at least one of position information of the base station in a two-dimensional plane (for example, latitude and longitude), an altitude of the antenna of the base station, a tilt angle of the antenna of the base station, and a rotation angle.

Note also that the information on the three-dimensional position of the RIS includes at least one of position information of the RIS in a two-dimensional plane (for example, latitude and longitude of the position of the RIS), an altitude of the RIS, and an angle of the RIS (orientation of the RIS).

Here, the RIS may hold the information on the three-dimensional position of the RIS. Meanwhile, the RIS may acquire the information on the three-dimensional position of the antenna of the base station from the base station, may acquire the information from an external device other than the base station, or may hold the information in advance.

In Option 2 of Proposal 1, the RIS derives information on the possible reflection angle with respect to the derived incidence angle based on the characteristics of the RIS (for example, the capability of the RIS). The RIS may record information on the possible reflection angle with respect to the incidence angle (for example, a set of the incidence angle and the possible reflection angle) and may indicate the recorded information to the base station. The information to be indicated to the base station may be, for example, information in which a set of the incidence angle and the possible reflection angle is recorded in a table format.

### <Variation of Option 2 of Proposal 1>

Option 2 of Proposal 1 is for an example in which a radio wave radiated from the base station and incident on the RIS is reflected by the RIS, but the present disclosure is not limited to this example. For example, Option 2 of Proposal 1 may be used in an example in which a radio wave radiated from a radio communication apparatus (for example, the UE) other than the base station and incident on the RIS is reflected by the RIS. Note that, in this case, the radio wave radiated from the UE and incident on the RIS at incidence angle α may correspond to a signal of the access link. In addition, the radio wave reflected at reflection angle β may correspond to a signal of the backhaul link.

In this case, the RIS may derive the incidence angle based on a positional relationship between the antenna of the UE and the RIS. In addition, for example, in this case, the positional relationship between the antenna of the UE and the RIS is obtained from information on a three-dimensional position of the antenna of the UE and information on a three-dimensional position of the RIS. Then, the RIS may derive the incidence angle from a geometric positional relationship between the antenna of the UE and the RIS in a three-dimensional space based on the information on the three-dimensional position of the antenna of the UE and the information on the three-dimensional position of the RIS. For example, a straight line connecting a representative point of the antenna (for example, a center of the antenna) of the UE and a representative point of the reflective surface (for example, a center of the reflective surface) of the RIS in the three-dimensional space may be defined, and an angle formed by the defined straight line and a perpendicular line extending perpendicularly from the representative point of the reflective surface of the RIS may be the incidence angle.

Note that the information on the three-dimensional position of the antenna of the UE includes at least one of position information of the UE in a two-dimensional plane (for example, latitude and longitude), an altitude of the antenna of the UE, a tilt angle of the antenna of the UE, and a rotation angle. Note that the position of the antenna of the UE may be simply replaced with the position of the UE. For example, the altitude of the antenna of the UE may be simply the altitude of the UE.

For example, in a case where a signal is transmitted through two RISs of RIS#1 and RIS#2, the incidence angle of the radio wave radiated from RIS#1 and incident on RIS#2 may be derived. In this case, at least one of RIS#1 and RIS#2 may derive the incidence angle based on a positional relationship between RIS#1 and RIS#2. Note that, in this case, the radio wave radiated from RIS#1 and incident on RIS#2 may correspond to a signal of the backhaul link.

In addition, for example, in a case where a signal is transmitted through three RISs of RIS#1, RIS#2, and RIS#3, the incidence angle of the radio wave radiated from RIS#1 and incident on RIS#2 may be derived. In this case, at least one of RIS#1 and RIS#2 may derive the incidence angle based on a positional relationship between RIS#1 and RIS#2. In addition, in this case, the radio wave reflected by RIS#2 and directed to RIS#3 may correspond to a signal of the backhaul link.

### <Option 3 of Proposal 1>

In Option 3 of Proposal 1, the incidence angle is derived based on the beam forming of the RIS. For example, in a case where the RIS forms a beam toward the base station, the incidence angle may be derived based on a direction of the formed beam.

For example, the beam formed toward the base station may be a receive beam for receiving a signal transmitted from the base station or may be a transmit beam for transmitting a signal to the base station. Here, the signal transmitted from the base station and/or the signal transmitted to the base station may be a signal of the backhaul link.

For example, the incidence angle may be derived based on an angle formed by the formed beam and the reflective surface of the RIS.

In addition, for example, identification information (for example, a beam index) for identifying the formed beam may be associated with the incidence angle. In this case, the incidence angle may be derived based on a correspondence relation between the identification information of the beam and the incidence angle.

The derivation of the incidence angle may be performed by the RIS that performs the beam forming. Alternatively, the derivation of the incidence angle may be performed by the base station. In a case where the incidence angle is derived by the base station, the RIS may transmit information on the beam formed toward the base station to the base station.

### <Variation of Option 3 of Proposal 1>

Option 3 of Proposal 1 is for an example in which a radio wave radiated from the base station and incident on the RIS is reflected by the RIS, but the present disclosure is not limited to this example. For example, Option 3 of Proposal 1 may be used in an example in which a radio wave radiated from a radio communication apparatus (for example, the UE) other than the base station and incident on the RIS is reflected by the RIS.

For example, in a case where the RIS forms a beam toward the UE, the incidence angle may be derived based on a direction of the formed beam. For example, the beam formed toward the UE may be a receive beam for receiving a signal transmitted from the UE or may be a transmit beam for transmitting a signal to the UE. Here, the signal transmitted from the UE and/or the signal transmitted to the UE may be a signal of the access link.

For example, in a case where a signal is transmitted through two RISs of RIS#1 and RIS#2, the incidence angle of a radio wave radiated from RIS#1 and incident on RIS#2 may be derived. In this case, in a case where RIS#2 forms a beam toward RIS#1, the incidence angle may be derived based on a direction of the formed beam. For example, the beam formed toward RIS#1 may be a receive beam for receiving a signal transmitted from RIS#1 or may be a transmit beam for transmitting a signal to RIS#1. Here, the signal transmitted from RIS#1 and/or the signal transmitted to RIS#1 may be a signal of the backhaul link. Note that the transmission of a signal by the RIS may be replaced with reflection of the signal by the RIS or relaying of the signal by the RIS, and the reception of a signal by the RIS may be replaced with incidence of the signal on the RIS.

### <Option 4 of Proposal 1>

In Option 4 of Proposal 1, the incidence angle is derived based on the beam forming of the RIS-MT. For example, in a case where the RIS-MT forms a beam toward the base station, the incidence angle may be derived based on a direction of the formed beam.

For example, the beam formed toward the base station may be a receive beam for receiving a signal transmitted from the base station or may be a transmit beam for transmitting a signal to the base station. Here, the signal transmitted from the base station may be a signal addressed to the RIS-MT or may be a signal of the access link. In addition, the signal transmitted to the base station may be a signal transmitted to the base station by the RIS-MT or may be a signal of the access link.

For example, the incidence angle may be derived based on an angle formed by the formed beam and the reflective surface of the RIS.

In addition, for example, identification information (for example, a beam index) for identifying the formed beam may be associated with the incidence angle. In this case, the incidence angle may be derived based on a correspondence relation between the identification information of the beam and the incidence angle.

A direction (angle) of the beam formed by the RIS-MT toward the base station may correspond to the incidence angle to be derived. Alternatively, the incidence angle of the RIS may be derived by performing a specific conversion on the direction (angle) of the beam formed by the RIS-MT toward the base station. For example, in a case where a specific angle difference is present between the direction (angle) of the beam formed by the RIS-MT toward the base station and the incidence angle of the RIS, the incidence angle of the RIS may be derived by adding the difference to the direction (angle) of the beam formed by the RIS-MT toward the base station.

The derivation of the incidence angle may be performed by the RIS that performs the beam forming. Alternatively, the derivation of the incidence angle may be performed by the base station. In a case where the incidence angle is derived by the base station, the RIS may transmit information on the beam formed toward the base station to the base station.

### <Variation of Option 4 of Proposal 1>

Option 4 of Proposal 1 is for an example in which a radio wave radiated from the base station and incident on the RIS is reflected by the RIS, but the present disclosure is not limited to this example. For example, Option 4 of Proposal 1 may be used in an example in which a radio wave radiated from a radio communication apparatus (for example, the UE) other than the base station and incident on the RIS is reflected by the RIS.

For example, in a case where the RIS-MT forms a beam toward the UE, the incidence angle may be derived based on a direction of the formed beam. For example, the beam formed toward the UE may be a receive beam for receiving a signal transmitted from the UE or may be a transmit beam for transmitting a signal to the UE. Here, the signal transmitted from the UE and/or the signal transmitted to the UE may be a signal of the access link.

For example, in a case where a signal is transmitted through two RISs of RIS#1 and RIS#2, the incidence angle of a radio wave radiated from RIS#1 and incident on RIS#2 may be derived. In this case, in a case where the RIS-MT of RIS#2 forms a beam toward RIS#1, the incidence angle may be derived based on a direction of the formed beam. For example, the beam formed toward RIS#1 may be a receive beam for receiving a signal transmitted from RIS#1 or may be a transmit beam for transmitting a signal to RIS#1. Here, the signal transmitted from RIS#1 and/or the signal transmitted to RIS#1 may be a signal of the backhaul link. Note that the transmission of a signal by the RIS may be replaced with reflection of the signal by the RIS or relaying of the signal by the RIS, and the reception of a signal by the RIS may be replaced with incidence of the signal on the RIS.

When the incidence angle is derived, it is assumed that the reflection angle is controlled based on the incidence angle. It is desired to acquire a correspondence relation between the incidence angle and the reflection angle in the RIS (hereinafter, may be referred to as a correspondence relation between incidence and reflection angles) for the control of the reflection angle based on the incidence angle.

### <Incidence and reflection angle table>

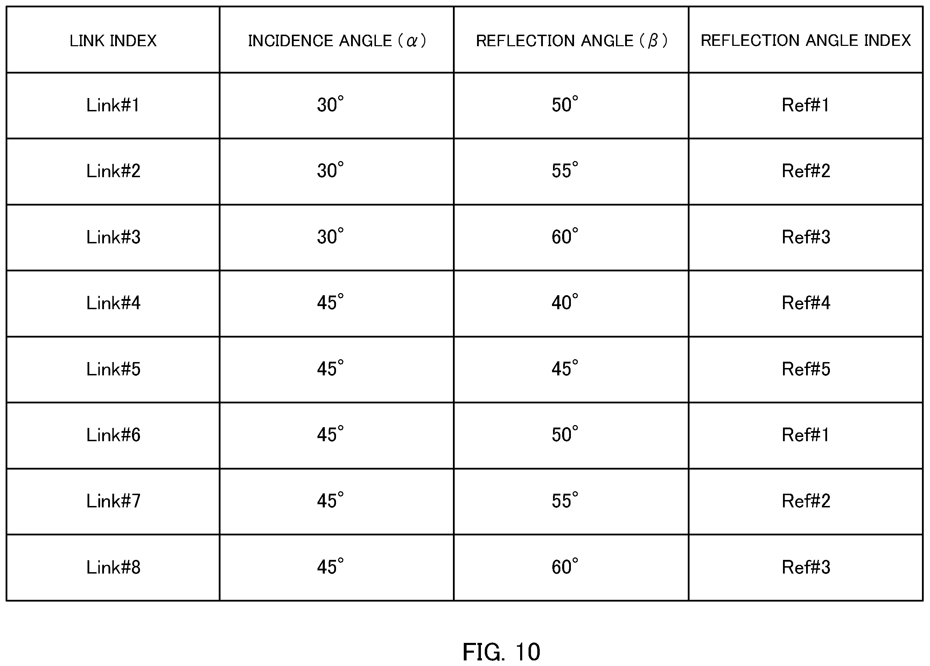

FIG. 10 is a diagram illustrating examples of a correspondence relation between the incidence angle and the reflection angle in a RIS. In FIG. 10, the correspondence relation is illustrated in a table format. In the correspondence relation, for example, the reflection angles of 50°, 55°, and 60° are associated with the incidence angle of 30°. This correspondence relation indicates that the RIS can reflect a radio wave (signal) incident on the RIS at the incidence angle of 30° at any of the reflection angles of 50°, 55°, and 60°.

In addition, in FIG. 10, a link index is assigned to a set of one incidence angle and one reflection angle corresponding to the incidence angle. The link index is an example of identification information for identifying a set of the incidence angle and the reflection angle. Further, in FIG. 10, a reflection angle index is assigned to the reflection angle. The reflection angle index is an example of identification information for identifying the reflection angle. Note that these two types of indexes may be assigned, or at least one of the indexes may be omitted.

In a case where the reflection angle is assigned an index, the reflection angle may be divided by relatively large units of 5°, and an index may be assigned to each reflection angle.

For example, all information of the correspondence relation as illustrated in FIG. 10 may be indicated to the base station, or some information of the correspondence relation may be indicated to the base station. For example, any of the following Alt. 1 to Alt. 4 is applied as a method of indicating the information to the base station.

### <Alt. 1>

In Alt. 1, the RIS indicates each of the correspondence relations between incidence and reflection angles to the base station. For example, information on the entire incidence and reflection angle table as illustrated in FIG. 10 is indicated to the base station.

For example, the RIS indicates each of the correspondence relations between incidence and reflection angles to the base station in a case where the incidence angle is not determined. Note that the RIS may indicate each of the correspondence relations between incidence and reflection angles to the base station in a case where the incidence angle is determined.

In a case where each of the correspondence relations between incidence and reflection angles is indicated to the base station as in Alt. 1, the base station can quickly instruct to the RIS any of the reflection angles corresponding to the incidence angle after the base station and/or the RIS derives the incidence angle, thereby reducing the signaling overhead after the incidence angle is derived.

### <Alt. 2>

In Alt. 2, the reflection angle is assigned a reflection angle index. In Alt. 2, the RIS indicates the index of the reflection angle to the base station. For example, in the table illustrated in FIG. 10, incidence angle (α) and one or more reflection angle indexes corresponding to incidence angle (α) are indicated to the base station. In the example of FIG. 10, there are two incidence angles of 30° and 45° and five reflection angles of 40°, 45°, 50°, 55°, and 60°, and thus, the two incidence angles and the five reflection angle indexes of Ref#1, Ref#2, Ref#3, Ref#4, and Ref#5 are indicated to the base station. Note that the reflection angle index may be indicated to the base station without the indication of the incidence angle.

For example, the RIS indicates the reflection angle index to the base station in a case where the incidence angle is not determined. Note that the RIS may indicate the reflection angle index to the base station in a case where the incidence angle is determined.

Indicating the reflection angle index to the base station as the information on the correspondence relation between incidence and reflection angles as in Alt. 2 makes it possible to reduce the signaling overhead required for the indication of the information on the correspondence relation between incidence and reflection angles.

### <Alt. 3>

In Alt. 3, the reflection angle is assigned an index. In Alt. 3, the RIS indicates to the base station only the reflection angle index corresponding to the determined incidence angle. In other words, in Alt. 3, the RIS indicates to the base station only the reflection angle index in current communication. For example, in the example of FIG. 10, in a case where the determined incidence angle is 30°, the incidence angle of 30° corresponds to the reflection angles of 50°, 55°, and 60°, so that Ref#1, Ref#2, and Ref#3, which are the indexes of the reflection angles of 50°, 55°, and 60°, respectively, are indicated to the base station.

Indicating the reflection angle index corresponding to the determined incidence angle to the base station as the information on the correspondence relation between incidence and reflection angles as in Alt. 3 makes it possible to reduce the signaling overhead required for the indication of the information on the correspondence relation between incidence and reflection angles.

### <Alt. 4>

In Alt. 4, only a value of the reflection angle is indicated to the base station. In this case, the reflection angle may not be assigned an index. In the example of FIG. 10, the values of five reflection angles of 40°, 45°, 50°, 55°, and 60° are indicated to the base station.

Note that, in a case where only the value of the reflection angle is indicated as in Alt. 4, the value of the reflection angle may be indicated by dividing the reflection angle by relatively small units of 1°. For example, information indicating the division method (for example, granularity) may be indicated from the base station to the RIS. The indication method from the base station to the RIS is not particularly limited, but for example, RRC or Operation, Administration and Maintenance (OAM) may be used for the indication.

By indicating the value of the reflection angle to the base station as the information on the correspondence relation between incidence and reflection angles as in Alt. 4, the reflection angle can be controlled with fine granularity (for example, in units of 1°).

Note that the indication methods to the base station in Alt. 1 to Alt. 4 described above are not particularly limited. For example, at least one of DCI, RRC, MAC CE, and OAM may be used.

In Proposal 1, the RIS (an example of a relay apparatus) includes a communication section that reflects, at a specific reflection angle, a signal incident at a specific incidence angle, and a control section that derives the specific incidence angle and configures a correspondence relation between the specific incidence angle and the specific reflection angle. In addition, in Proposal 1, the base station includes a control section that derives a specific incidence angle at a relay apparatus that reflects, at a specific reflection angle, a signal incident at the specific incidence angle, and a reception section that receives information on the correspondence relation between the specific incidence angle and the specific reflection angle. This configuration allows the base station and/or the RIS to derive the incidence angle and perform the control based on the information on the correspondence relation between incidence and reflection angles, thereby appropriately controlling the RIS (for example, controlling the incidence angle and the reflection angle).

### <Proposal 2>

In Proposal 2, an example of the control of the incidence and reflection angles on the NW side will be described. For example, the NW side controls the incidence and reflection angles based on the correspondence relation as illustrated in FIG. 10.

The NW side (for example, the base station) determines a specific reflection angle based on the incidence and reflection angle table, and instructs the information on the determined specific reflection angle to the RIS by signaling. Here, the specific reflection angle may be a desired reflection angle, a reflection angle corresponding to a desired link, or a reflection angle applied to communication. The specific reflection angle may be a reflection angle for a specific link.

The instruction of the information on the specific reflection angle to the RIS allows the RIS to perform the reflection at the specific reflection angle. As a result, the base station can perform the connection using a specific link (for example, a desired link).

Note that a method of signaling for the instruction is not particularly limited, but for example, at least one of DCI, RRC, MAC CE, and OAM may be used.

In the DCI, for example, information on the control of the incidence and reflection angles is individually indicated to the UE. In the DCI, the configuration is performed for once (or for a specific short period). For example, the DCI is used for scheduling of a data channel such as a PDSCH and a PUSCH.

In the RRC, the configuration is performed for a periodic signal (for example, SSB and RACH).

In the MAC CE, the configuration is performed for a semi-persistent channel (or signal).

Any of the following options may be used as a method of the instruction from the NW side (for example, the base station) to the RIS.

### <Option 1 of Proposal 2>

In Option 1 of Proposal 2, the base station performs an instruction to the RIS by using a link index. The method of the instruction is not particularly limited, but for example, the base station may perform the instruction by using at least one of the DCI, the RRC, the MAC CE, and the OAM. The base station instructs a specific link (for example, a desired link) to the RIS by using the link index.

### <Option 2 of Proposal 2>

In Option 2 of Proposal 2, the base station performs an instruction to the RIS by using the reflection angle index. The method of the instruction is not particularly limited, but for example, the base station may perform the instruction by using at least one of the DCI, the RRC, the MAC CE, and the OAM. The base station instructs the specific reflection angle (for example, the desired reflection angle) to the RIS by using the reflection angle index.

### <Option 3 of Proposal 2>

In Option 3 of Proposal 2, the base station instructs a value of the reflection angle to the RIS. The method of the instruction is not particularly limited, but for example, the base station may perform the instruction by using at least one of the DCI, the RRC, the MAC CE, and the OAM. The base station instructs a specific reflection angle (for example, a desired reflection angle) to the RIS.

In Proposal 2, the RIS (an example of a relay apparatus) includes a communication section that reflects, at a specific reflection angle, a signal incident at a specific incidence angle, and a control section that acquires information (for example, a reflection angle index) indicating the specific reflection angle and controls the communication section based on the information. In addition, in Proposal 2, the base station includes a control section that acquires information on a correspondence relation between a specific incidence angle and a specific reflection angle at the RIS that reflects, at the specific reflection angle, a signal incident at the specific incidence angle, and configures the specific reflection angle based on the information, and a transmission section that transmits information indicating the configured specific reflection angle to the RIS. With this configuration, the base station can instruct the reflection angle to the RIS and the RIS can reflect a signal at the reflection angle based on the instruction, thereby appropriately controlling the RIS (for example, controlling the incidence angle and the reflection angle).

Note that, in the above-described embodiment, a description has been given of an example of processing in a downlink in which the RIS forwards a signal transmitted by the gNB to the UE, but the present disclosure is not limited thereto. The present disclosure may be applied to processing in an uplink in which the RIS forwards a signal transmitted by the UE to the gNB, or may be applied to processing in which the RIS forwards a signal transmitted by the UE to UE other than the UE.

In addition, in the above-described embodiment, an example in which one RIS is provided between the gNB and the UE has been described, but the present disclosure is not limited thereto. For example, a plurality of RISs may be provided between the gNB and the UE. For example, the first RIS may forward a signal transmitted by the gNB to the second RIS, and the second RIS may forward the signal to the UE. In addition, in this case, the first RIS may generate a multi-beam (for example, a multi-wide beam described above) to forward a signal to a plurality of second RISs, and each of the plurality of second RISs may further forward the signal to the UE.

Note that, in the present disclosure, "A/B" and "at least one of A and B" may be replaced with each other. Further, in the present disclosure, "A/B/C" may mean "at least one of A, B, and C".

In the present disclosure, notify, activate, deactivate, indicate, select, configure, update, determine, and the like may be replaced with each other. In the present disclosure, support, control, be able to control, operate, and be able to operate may be replaced with each other.

In the present disclosure, radio resource control (RRC), an RRC parameter, an RRC message, a higher layer parameter, a field, an information element (IE), a configuration, and the like may be replaced with each other. In the present disclosure, a medium access control (MAC) control element (CE), an update command, an activation/deactivation command, and the like may be replaced with each other.

In the present disclosure, higher layer signaling may be any of the following or a combination thereof: radio resource control (RRC) signaling, medium access control (MAC) signaling, broadcast information, another message (for example, a message from a core network such as a positioning protocol (for example, an NR positioning protocol A (NRPPa)/an LTE positioning protocol (LPP)) message), and the like.

In the present disclosure, MAC signaling may use, for example, a MAC control element (MAC CE) or a MAC protocol data unit (PDU). Broadcast information may be, for example, a master information block (MIB), a system information block (SIB), remaining minimum system information (RMSI), other system information (OSI), or the like.

In the present disclosure, physical layer signaling may be, for example, downlink control information (DCI), uplink control information (UCI), or the like.

In the present disclosure, an aperture, an antenna array, an array, a subarray (a plurality of antenna elements, a part of an array), a panel, an RIS, an RIS array, a scattering element array, and the like may be replaced with each other. In the present disclosure, an antenna, an antenna element, a scattering element, and the like may be replaced with each other.

In the present disclosure, an NCR, an RIS, an NCR including an RIS, a network node, an apparatus, an IAB, an IAB- mobile termination (MT), an IAB- distribution unit (DU), an IAB- central unit (CU), a terminal, a base station, a relay station, a relay apparatus, a repeater, a reflector, a transponder, an RIS-NCR, an RIS-type NCR, an extended NCR, and the like may be replaced with each other.

### <Block Configuration Diagram>

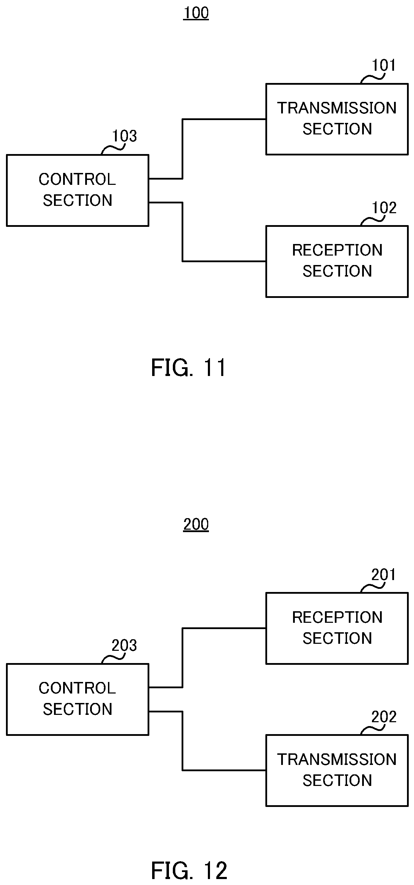

FIG. 11 is a block diagram illustrating an example of a configuration of base station 100 according to an embodiment of the present disclosure. Base station 100 includes, for example, transmission section 101, reception section 102, and control section 103. Base station 100 communicates with terminal 200 (see FIG. 12) by radio. Note that transmission section 101 and reception section 102 may be collectively referred to as a communication section. The control section may be referred to as a processing section, a processor, or the like.

Transmission section 101 transmits a DL signal to terminal 200. For example, transmission section 101 transmits the DL signal under the control of control section 103. For example, the DL signal may include information indicating scheduling related to signal transmission of terminal 200 (for example, an UL grant), control information of a higher layer, or the like.

For example, transmission section 101 transmits various control signals (control signals of a higher layer or the like), reference signals, data signals, and the like to terminal 200 and/or radio apparatus 300 as the DL signal. Transmission section 101 transmits various signals, channels, configuration information, control information, and the like described in the above embodiment to terminal 200 as the DL signal, for example.

For example, transmission section 101 transmits information on the control of terminal 200 generated by control section 103 to terminal 200. In addition, for example, transmission section 101 transmits information on the control of radio apparatus 300 generated by control section 103 to radio apparatus 300. Further, transmission section 101 transmits a data signal generated by control section 103 to terminal 200.

Reception section 102 receives a UL signal transmitted from terminal 200. For example, reception section 102 receives the UL signal under the control of control section 103. In addition, reception section 102 may receive a UL signal transmitted from radio apparatus 300.

For example, reception section 102 receives a signal including terminal capability information (for example, UE capability) of terminal 200, various control signals, reference signals, data signals, and the like from terminal 200 as the UL signal. Reception section 102 may also receive a signal including capability information (for example, capability) of radio apparatus 300.

Control section 103 controls the overall (communication) operation of base station 100, including the transmission processing in transmission section 101 and the reception processing in reception section 102.

For example, control section 103 acquires information such as data and control information from a higher layer, and outputs the information to transmission section 101. Further, control section 103 outputs the data, control information, and/or the like received from reception section 102 to a higher layer.

For example, control section 103 allocates resources to be used for DL signal transmission and reception and/or resources to be used for UL signal transmission and reception, based on the signal (e.g., the data, the control information and/or the like) received from terminal 200 and/or the data, the control information and/or the like acquired from a higher layer. Information on the allocated resources may be included in control information to be transmitted to terminal 200.

Control section 103 executes operations other than the transmission and reception described in the above embodiment (note that the operations may be executed by transmission section 101 and/or reception section 102).

In addition, control section 103 may generate control information related to a forwarding operation of radio apparatus 300. Control section 103 may transmit an indication (for example, control information) related to communication control of radio apparatus 300 via transmission section 101.

In the above-described Proposal 1, by way of example, control section 103 of base station 100 derives a specific incidence angle at the RIS (an example of a relay apparatus) that reflects, at a specific reflection angle, a signal incident at the specific incidence angle. Reception section 102 of base station 100 receives information on a correspondence relation between the specific incidence angle and the specific reflection angle.

In the above-described Proposal 2, by way of example, control section 103 of base station 100 acquires information on a correspondence relation between a specific incidence angle and a specific reflection angle at the RIS (an example of a relay apparatus) that reflects, at the specific reflection angle, a signal incident at the specific incidence angle, and configures the specific reflection angle based on the information. Transmission section 101 of base station 100 transmits information indicating the configured specific reflection angle to the RIS.

FIG. 12 is a block diagram illustrating an example of a configuration of terminal 200 according to an embodiment of the present disclosure. Terminal 200 includes, for example, reception section 201, transmission section 202, and control section 203. Terminal 200 communicates with base station 100 (see FIG. 11) by radio, for example. Note that reception section 201 and transmission section 202 may be collectively referred to as a communication section.

Reception section 201 receives a DL signal transmitted from base station 100. For example, reception section 201 receives the DL signal under the control of control section 203.

For example, reception section 201 receives various control signals, reference signals, data signals, and the like from base station 100 as the DL signal. Reception section 201 receives various signals, channels, configuration information, control information, and the like described in the above embodiment from base station 100 as the DL signal, for example.

For example, reception section 201 receives a signal from base station 100.

Transmission section 202 transmits a UL signal to base station 100. For example, transmission section 202 transmits the UL signal under the control of control section 203.

For example, transmission section 202 transmits a signal including information on the processing capability of terminal 200, various control signals, reference signals, data signals, and the like to base station 100 as the UL signal.

Control section 203 controls the overall (communication) operation of terminal 200, including the reception processing in reception section 201 and the transmission processing in transmission section 202.

For example, control section 203 acquires information such as data and control information from a higher layer, and outputs the information to transmission section 202. Further, control section 203 outputs, for example, the data, the control information and/or the like received from reception section 201 to a higher layer.

Control section 203 executes operations other than the transmission and reception described in the above embodiment (note that the operations may be executed by reception section 201 and/or transmission section 202).

Note that a signal received by terminal 200 from base station 100 may be a signal directly transmitted from base station 100 or may be a signal transmitted from base station 100 and forwarded by radio apparatus 300. In addition, a signal transmitted by terminal 200 to base station 100 may be directly received by base station 100 or may be forwarded by radio apparatus 300 and received by base station 100. In this case, terminal 200 need not recognize whether the signal is forwarded by radio apparatus 300.

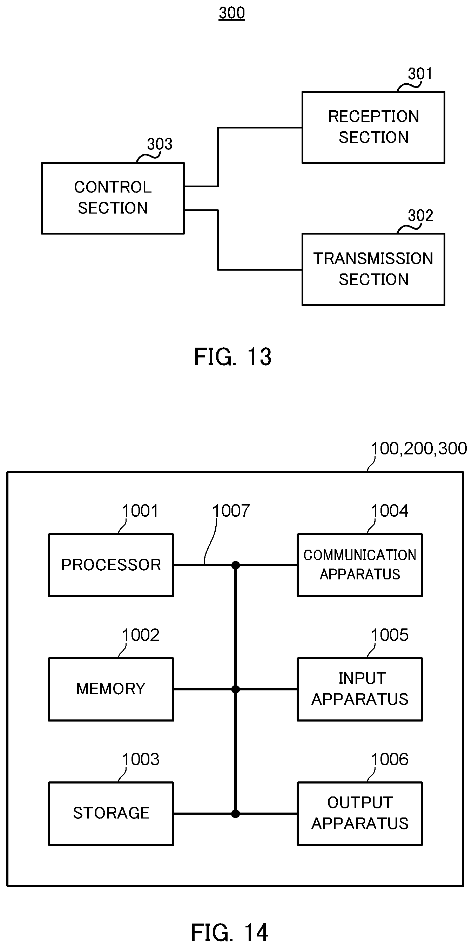

FIG. 13 is a block diagram illustrating an example of a configuration of radio apparatus 300 according to an embodiment of the present disclosure. Radio apparatus 300 corresponds to an example of the RIS or the relay apparatus. Radio apparatus 300 includes, for example, reception section 301, transmission section 302, and control section 303. Radio apparatus 300 communicates with base station 100 (see FIG. 11) and terminal 200 (see FIG. 12) by radio, for example. Note that reception section 301 and transmission section 302 may be collectively referred to as a communication section. The communication section may have a radiation surface (for example, an RIS array) that radiates a radio wave, and may transmit a signal from the radiation surface or may receive a signal on the radiation surface.

Reception section 301 receives a DL signal transmitted from base station 100. In addition, reception section 301 receives a UL signal transmitted from terminal 200. For example, reception section 301 receives the DL signal and the UL signal under the control of control section 303. Note that the received signal may include a signal addressed to base station 100, a signal addressed to terminal 200, and a signal addressed to radio apparatus 300. For example, reception section 301 receives a signal transmitted from base station 100 to terminal 200 (for example, a signal specific to terminal 200). Note that forwarding processing may include at least one of processing of transmitting, to terminal 200, a signal that is received from base station 100 and addressed to terminal 200 and processing of receiving a signal addressed to base station 100 from terminal 200.

Transmission section 302 transmits, to base station 100, the UL signal that is received from terminal 200 and addressed to base station 100. In addition, transmission section 302 transmits, to terminal 200, the DL signal that is received from base station 100 and addressed to terminal 200. For example, transmission section 302 transmits the UL signal under the control of control section 303. For example, transmission section 302 forwards, to terminal 200, the signal that is received from base station 100 and addressed to terminal 200.

Control section 303 controls the overall (communication) operation of radio apparatus 300, including the reception processing in reception section 301 and the transmission processing in transmission section 302.

For example, control section 303 generates a beam to be used by transmission section 302. Control section 303 selects (determines) a codeword based on a geometric relationship (for example, a focal position or a focal distance) between radio apparatus 300 and a target area (an area covered by radio apparatus 300) using acquired information on the target area. Then, control section 303 executes control to generate the beam by applying the determined codeword.

Control section 303 executes operations other than the transmission and reception described in the above embodiment (note that the operations may be executed by reception section 301 and/or transmission section 302).

In the above-described Proposal 1, by way of example, a communication section (reception section 301 and/or transmission section 302) of radio apparatus 300 (an example of the relay apparatus or the RIS) reflects, at a specific reflection angle, a signal incident at a specific incidence angle. Control section 303 of radio apparatus 300 derives the specific incidence angle and configures a correspondence relation between the specific incidence angle and the specific reflection angle.

In the above-described Proposal 2, by way of example, the communication section (reception section 301 and/or transmission section 302) of radio apparatus 300 (an example of the relay apparatus or the RIS) reflects, at a specific reflection angle, a signal incident at a specific incidence angle. Control section 303 of radio apparatus 300 acquires information indicating the specific reflection angle and controls the communication section based on the information.

Note that radio apparatus (for example, the RIS) 300 in the present disclosure may be an example of a communication apparatus. In addition, radio apparatus 300 in the present disclosure may be referred to by another name, such as a repeater, a forwarding apparatus, or a relay apparatus. Further, radio apparatus 300 in the present disclosure may be replaced with terminal 200 (for example, UE). For example, radio apparatus 300 may be regarded as terminal 200 having a forwarding function (or a relay function).

The present disclosure has been described, thus far. Note that the division of the items in the above description is not essential to the present disclosure, and matters described in two or more items may be used in combination as necessary, and matters described in one item may be applied to matters described in another item (as long as they do not contradict each other).

### <Hardware Structure>

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

For example, a base station, a terminal, a radio apparatus, and so on according to one embodiment of the present disclosure may function as a computer that executes the processes of the radio communication method of the present disclosure. FIG. 14 is a diagram to show an example of a hardware structure of a base station, a terminal, and a radio apparatus according to an embodiment of the present disclosure. Physically, the above-described base station 100, terminal 200, and radio apparatus 300 may each be formed as a computer apparatus that includes processor 1001, memory 1002, storage 1003, communication apparatus 1004, input apparatus 1005, output apparatus 1006, bus 1007, and so on.

Note that in the present disclosure, the words such as an apparatus, a circuit, a device, a section, a unit, and so on can be interchangeably interpreted. The hardware structure of base station 100, terminal 200, and radio apparatus 300 may be configured to include one or more of apparatuses illustrated in the drawings, or may be configured not to include part of apparatuses.

Each function of base station 100, terminal 200, and radio apparatus 300 is implemented, for example, by allowing certain software (programs) to be read on hardware such as processor 1001 and memory 1002, and by allowing processor 1001 to perform calculations to control communication via communication apparatus 1004 and control at least one of reading and writing of data in memory 1002 and storage 1003.

Processor 1001 controls the whole computer by, for example, running an operating system. Processor 1001 may be configured with a central processing unit (CPU), which includes interfaces with peripheral apparatus, control apparatus, computing apparatus, a register, and so on. For example, at least part of above-described control section 103, control section 203, control section 303, and so on may be implemented by processor 1001.

Furthermore, processor 1001 reads programs (program codes), software modules, data, and so on from at least one of storage 1003 and communication apparatus 1004, into memory 1002, and executes various processes according to these. As for the programs, programs to allow computers to execute at least part of the operations of the above-described embodiments are used. For example, control section 203 of terminal 200 may be implemented by control programs that are stored in memory 1002 and that operate on processor 1001, and other functional blocks may be implemented likewise. The various processes have been described to be performed by single processor 1001. However, the processes may be performed by two or more processors 1001 simultaneously or sequentially. Processor 1001 may be implemented by one or more chips. It should be noted that the program may be transmitted from a network via a telecommunication line.

Memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. Memory 1002 may be referred to as a "register," a "cache," a "main memory (primary storage apparatus)" and so on. Memory 1002 can store executable programs (program codes), software modules, and the like for implementing the radio communication method according to one embodiment of the present disclosure.

Storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blue-ray (registered trademark) disk), a removable disk, a hard disk drive, a smart card, a flash memory device (for example, a card, a stick, and a key drive), a magnetic stripe, a database, a server, and other appropriate storage media. Storage 1003 may be referred to as "auxiliary storage apparatus." The above recording medium may be a database including memory 1002 and/or storage 1003, a server, or any other appropriate medium.

Communication apparatus 1004 is hardware (transmitting/receiving device) for allowing inter-computer communication via at least one of wired and wireless networks, and may be referred to as, for example, a "network device," a "network controller," a "network card," a "communication module," and so on. Communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmission section 101, reception section 102, reception section 201, transmission section 202, reception section 301, transmission section 302 and the like, may be realized by communication apparatus 1004.

Input apparatus 1005 is an input device that receives input from the outside (for example, a keyboard, a mouse, a microphone, a switch, a button, a sensor, and so on). Output apparatus 1006 is an output device that allows sending output to the outside (for example, a display, a speaker, a Light Emitting Diode (LED) lamp, and so on). Note that input apparatus 1005 and output apparatus 1006 may be provided in an integrated structure (for example, a touch panel).

Furthermore, these types of apparatus, including processor 1001, memory 1002, and others, are connected by bus 1007 for communicating information. Bus 1007 may be formed with a single bus, or may be formed with buses that vary between pieces of apparatus.

Also, base station 100, terminal 200, and radio apparatus 300 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### <Notification and Signaling of Information>

Notification of information is by no means limited to the embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

### <Application System>

The embodiments illustrated in the present disclosure may be applied to Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New Radio (NR), New radio access (NX), Future generation radio access (FX), W-CDMA (registered trademark), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

### <Processing Procedure and the like>

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

### <Operation of Base Station>

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these. According to the above, a case is described in which there is a single network node other than the base station. However, a combination of multiple other network nodes may be considered (e.g., MME and S-GW).

### <Direction of Input and Output>

The information or signals described in this disclosure may be output from a higher layer (or lower layer) to a lower layer (or higher layer). The information or signals may be input or output through multiple network nodes.

### <Handling of Input and Output Information and the like>

The input or output information may be stored in a specific location (e.g., memory) or managed using management tables. The input or output information may be overwritten, updated, or added. The information that has been output may be deleted. The information that has been input may be transmitted to another apparatus.

### <Determination Method>

A decision or a determination in an embodiment of the present invention may be realized by a value (0 or 1) represented by one bit, by a boolean value (true or false), or by comparison of numerical values (e.g., comparison with a predetermined values).

### <Variations and the like of Aspects>

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### <Software>

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

### <Information and Signals>

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

### <System and Network>

As used in the present disclosure, the terms "system" and "network" are used interchangeably.

### <Names of Parameters and Channels>

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

### <Base Station>

In the present disclosure, the terms such as a "base station (BS)," a "radio base station," a "fixed station," a "NodeB," an "eNB (eNodeB)," a "gNB (gNodeB)," an "access point," a "transmission point," a "reception point," a "transmission/reception point," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

### <Mobile Station>

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

### <Base Station/Mobile Station>

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on. The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

Furthermore, the base station in the present disclosure may be interpreted as a terminal. For example, an embodiment of the present disclosure may be applied to the structure that replaces a communication between a base station and a terminal with a communication between a plurality of terminals (for example, which may be referred to as "Device-to-Device (D2D)," "Vehicle-to-Everything (V2X)," and the like). In this case, terminal 200 and radio apparatus 300 may have the functions of base station 100 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the terminal in the present disclosure may be interpreted as base station. In this case, base station 100 and relay station 300 may have the functions of terminal 20 described above.

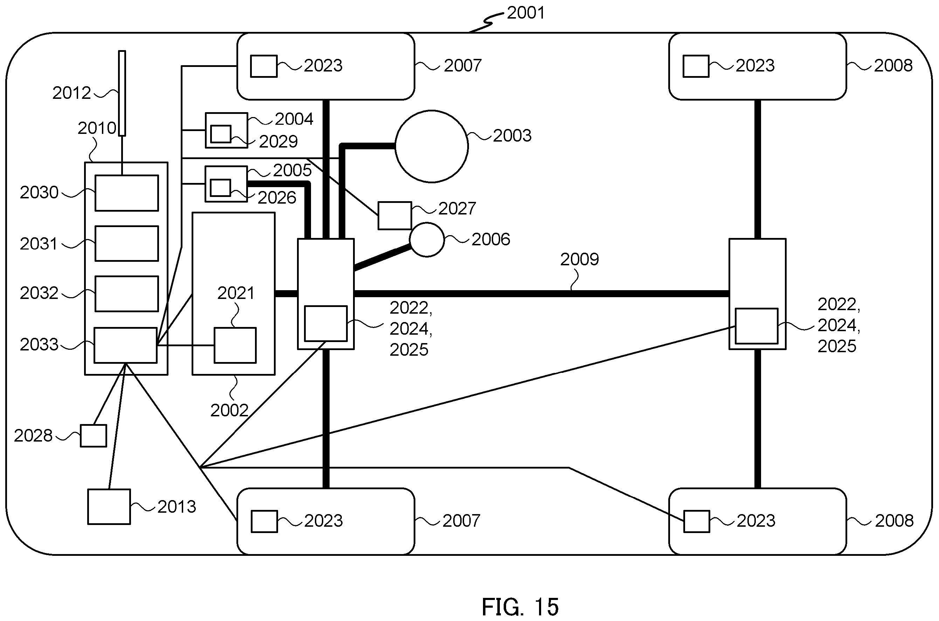

FIG. 15 illustrates an example of a configuration of vehicle 2001. As illustrated in FIG. 15, vehicle 2001 includes drive unit 2002, steering unit 2003, accelerator pedal 2004, brake pedal 2005, shift lever 2006, front wheel 2007, rear wheel 2008, axle 2009, electronic control unit 2010, various sensors 2021 to 2029, information service unit 2012, and communication module 2013. The aspects/embodiments described in the present disclosure may be applied to a communication device mounted in vehicle 2001, and may be applied to, for example, communication module 2013.

Drive unit 2002 may include, for example, an engine, a motor, and a hybrid of an engine and a motor. Steering unit 2003 includes at least a steering wheel and is configured to steer at least one of the front wheel or the rear wheel, based on the operation of the steering wheel operated by the user.

Electronic control unit 2010 includes microprocessor 2031, memory (ROM, RAM) 2032, and communication port (IO port) 2033. Electronic control unit 2010 receives signals from the various sensors 2021 to 2029 provided in vehicle 2001. Electronic control unit 2010 may be referred to as an ECU (Electronic control unit).

Signals from various sensors 2021 to 2029 include a current signal from current sensor 2021 which senses the current of the motor, a front or rear wheel rotation signal acquired by revolution sensor 2022, a front or rear wheel pneumatic signal acquired by pneumatic sensor 2023, a vehicle speed signal acquired by vehicle speed sensor 2024, an acceleration signal acquired by acceleration sensor 2025, a stepped-on accelerator pedal signal acquired by accelerator pedal sensor 2029, a stepped-on brake pedal signal acquired by brake pedal sensor 2026, an operation signal of a shift lever acquired by shift lever sensor 2027, and a detection signal, acquired by object detection sensor 2028, for detecting an obstacle, a vehicle, a pedestrian, and the like.

Information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

Information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

Driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, driving support system unit 2030 transmits and receives various types of information via communication module 2013 to realize a driving support function or an autonomous driving function.

Communication module 2013 may communicate with microprocessor 2031 and components of vehicle 2001 via a communication port. For example, communication module 2013 transmits and receives data via communication port 2033, to and from drive unit 2002, steering unit 2003, accelerator pedal 2004, brake pedal 2005, shift lever 2006, front wheel 2007, rear wheel 2008, axle 2009, microprocessor 2031 and memory (ROM, RAM) 2032 in electronic control unit 2010, and sensors 2021 to 29 provided in vehicle 2001.

Communication module 2013 is a communication device that can be controlled by microprocessor 2031 of electronic control unit 2010 and that is capable of communicating with external devices. For example, various kinds of information are transmitted to and received from external devices through radio communication. Communication module 2013 may be internal to or external to electronic control unit 2010. The external devices may include, for example, a base station, a mobile station, or the like.

Communication module 2013 may transmit at least one of signals from various sensors 2021 to 2029 described above input to electronic control unit 2010, information obtained based on the signals, and information based on an input from the outside (a user) obtained via information service unit 2012, to the external apparatus via radio communication. Electronic control unit 2010, various sensors 2021 to 2029, information service unit 2012, and the like may be referred to as input units that receive input. For example, the PUSCH transmitted by communication module 2013 may include information based on the input.

Communication module 2013 receives various types of information (traffic information, signal information, inter-vehicle information, etc.) transmitted from the external devices and displays the received information on information service unit 2012 provided in vehicle 2001. Information service unit 2012 may be referred to as an output unit that outputs information (for example, outputs information to devices, such as a display and a speaker, based on the PDSCH received by communication module 2013 (or data/information decoded from the PDSCH)).

In addition, communication module 2013 stores the various types of information received from the external devices in memory 2032 available to microprocessor 2031. Based on the information stored in memory 2032, microprocessor 2031 may control drive unit 2002, steering unit 2003, accelerator pedal 2004, brake pedal 2005, shift lever 2006, front wheel 2007, rear wheel 2008, axle 2009, sensors 2021 to 2029 etc., mounted in vehicle 2001.

### <Meaning and Interpretation of Terms>

As used herein, the term "determining" may encompasses a wide variety of actions. For example, "determining" may be regarded as judging, calculating, computing, processing, deriving, investigating, looking up or search inquiry (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Also, "determining" may be replaced with "assuming," "expecting," "considering," and the like.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

### <Reference Signal>

A reference signal may be abbreviated as an "RS," and may be referred to as a "pilot" and so on, depending on which standard applies.

### <Meaning of "Based On">

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

### <"First" and "Second">

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

### <Means>

"Means" included in the configuration of each of the above apparatuses may be replaced by "parts," "circuits," "devices," etc.

### <Open Form>

In the case where the terms "include," "including" and variations thereof are used in the present disclosure, these terms are intended to be comprehensive in the same way as the term "comprising." Further, the term "or" used in the present specification is not intended to be an "exclusive or."

### <Time Units such as TTI, Frequency Units such as RB, and Radio Frame Configuration>

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a "Transmission Time Interval (TTI)," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

### <Maximum Transmit Power>

The "maximum transmit power" described in the present disclosure may mean a maximum value of the transmit power, the nominal UE maximum transmit power, or the rated UE maximum transmit power.

### <Article>

In the present disclosure, where an article is added by translation, for example "a," "an," and "the," the disclosure may include that the noun following these articles is plural.

### <"Different">

In this disclosure, the term "A and B are different" may mean "A and B are different from each other." It should be noted that the term "A and B are different" may mean "A and B are different from C." Terms such as "separated" or "combined" may be interpreted in the same way as the above-described "different."

### Industrial Applicability

An aspect of the present disclosure is useful for radio communication systems.

### Reference Signs List

10 Radio communication system
20 NG-RAN
100 Base station (gNB)
200 Terminal (UE)
300 Radio apparatus (RIS)
101, 202, 302 Transmission section
102, 201, 301 Reception section
103, 203, 303 Control section
101 Processor
1002 Memory
1003 Storage
1004 Communication apparatus
1005 Input apparatus
1006 Output apparatus
1007 Bus

## Claims

1. A relay apparatus comprising:
a communication section that reflects, at a specific reflection angle, a signal incident at a specific incidence angle; and
a control section that acquires information indicating the specific reflection angle and controls the communication section based on the information.

2. The relay apparatus according to Claim 1, wherein,
the information includes an index identifying a set of the specific incidence angle and the specific reflection angle, and
the control section controls the communication section to reflect the signal at the specific reflection angle identified by the index.

3. The relay apparatus according to Claim 1, wherein,
the information includes an index identifying the specific reflection angle, and
the control section controls the communication section to reflect the signal at the specific reflection angle identified by the index.

4. A base station comprising:
a control section that acquires information on a correspondence relation between a specific incidence angle and a specific reflection angle at a relay apparatus that reflects, at the specific reflection angle, a signal incident at the specific incidence angle, and configures the specific reflection angle based on the information; and
a transmission section that transmits information indicating the configured specific reflection angle to the relay apparatus.

5. A radio communication method comprising:
acquiring information indicating a specific reflection angle by a relay apparatus including a communication section that reflects, at the specific reflection angle, a signal incident at a specific incidence angle; and
controlling, by the relay apparatus, the communication section based on the information.

6. A radio communication method comprising:
acquiring, by a base station, information on a correspondence relation between a specific incidence angle and a specific reflection angle at a relay apparatus that reflects, at the specific reflection angle, a signal incident at the specific incidence angle;
configuring, by the base station, the specific reflection angle based on the information; and
transmitting, by the base station, information indicating the configured specific reflection angle to the relay apparatus.
